# EUROPEAN PATENT APPLICATION

(11) **EP 3 696 049 A1**
(43) Date of publication of application: **19.08.2020**
(21) Application number: 20155153.8
(22) Date of filing: 03.02.2020
(51) Int. Cl.: B61L 27/00, B61D 3/00, B61L 27/04

(54) **FREIGHT WAGON, SYSTEM, AND METHOD FOR MANAGING RAILWAY FREIGHT**

(30) Priority: 05.02.2019 IN 201941004609
(71) Applicant: ALSTOM Transport Technologies, 93400 Saint-Ouen (FR)
(72) Inventor: GANESAN, Muniandi, 626001 Virudhunagar (IN); SINGH, Jasvinder, 560068 BANGALORE URBAN (IN); VARMA, Rakesh, 500089 Hyderabad (IN); KUMAR, Pradyumna, 574240 Ujire (IN); SADASIVAM, Udayakumar, 563120 KOLAR GOLD FIELDS (IN); JHANWAR, Rahul, 302020 Jaipur (IN)
(74) Representative: Lavoix

(57) **Abstract**

A freight wagon (1) comprising a load compartment (2) for accommodating goods to be transported, an on-board control system (3) which is suitable to receive instructions for the freight wagon (1) to execute one or more phases of a predefined freight plan related to a request from a user for goods transportation, wherein, while executing the one or more phases, the on-board control system (3) is arranged to record and communicate to one or more remote external control centers (110, 120, 130), events indicative of the one or more phases of the predefined freight plan under execution, and an autonomous on-board power feeding unit (4) for self-powering the wagon freight (1) during execution of at least part of the one or more phases.

A distributed control system (100) and method (300) for managing railway freight are also disclosed.

## Description

The present invention concerns a system, a method and a freight wagon, in particular an intelligent, self-propelled freight wagon, for advanced smart management of railway freight operations.

As known, railways freight has been historically one of the most popular and widely used ways for transporting goods worldwide.

Recently, notwithstanding the generally increased awareness and attention to environmental aspects, which should have naturally favored the use of trains versus others means of transportation which are more polluting, such as trucks or ships, the share of goods transportation via rail freight appears declining year after year.

One of the main problems of rail freight systems resides in the unsatisfactory planning of resources to be provided on request to customers and the related inefficiency in managing logistics connected to freight operations, e.g. loading/unloading areas, freight stations, availability of wagons and formation of trains, et cetera....

Indeed, still nowadays, the offer for rail transportation is usually planned up front, on the basis of experiences and statistical data over past periods, and of presumed future trends, without taking into account real requests.

Therefore, once customers place demands for rail freights, in many cases loading wagons should be collected from one or more depot areas and a freight train should be formed and sent to the loading location.

This results in a series of operational inefficiencies, and negatively impacts the overall costs.

For example, in the areas where loading wagons are parked, a maneuver locomotive is usually needed in order to collect the various wagons and form a freight train.

This implies also the presence of operators, in order to manually connect wagons, and the management of rather complex logistic infrastructures, e.g. dedicated areas, offices, equipment, staff, and the like.

In addition, in the majority of cases, freight trains are formed in several and distant areas in order to satisfy at the same time multiple customers.

Hence, the above indicated issues are further amplified, and routes of single wagons or group of load wagons are not optimized.

As a consequence, in areas where the request for rail freights is limited or presumably limited, implementation and/or maintenance of local logistics structures has been avoided or abandoned, thus for example suppressing freight areas even for stations of not negligible size.

In this way, a vicious circle has been triggered where the absence of close freight areas has reduced the demand for such type of transportation, and the declining demand for rail freight has inhibited investments in new infrastructures and caused shut down of further freight areas.

In the end, fewer and bigger freight hubs have been created, which still make rail freight competitive for large scale and long range shipments, but have definitely penalized small scale and short medium rail shipments in favor of truck expeditions.

Some solutions have been devised in order to at least partially mitigate this negative situation, as for example described in US 5 828 979 which discloses a system and a method for controlling the movement of plural freight trains through a multiple route railway system, where movements of freight trains are monitored and orchestrated in accordance with a dynamic schedule that is determined through an evaluation of delivery requirements and coordination among all trains.

This solution offers some improved efficiency in managing rail freight operations, but it is substantially limited to manage freight trains already composed and does not afford many other issues, e.g. manual coupling of trains, et cetera....

Hence, it is evident that there is substantial room and need for further improvements in managing rail freights.

Therefore, it is a main aim of the present invention to provide a solution for managing rail freight operations offering substantial improvements over known solutions, in particular as regard to the efficiency of planning and executing rail freight operations, especially when facing real time requests from customers.

Within the scope of this aim, an object of the present invention is to provide a solution which allows properly managing customer requests for freight operations, either for long range and large scale shipments, as well as for small and short/medium range shipments, taking into account even financial aspects connected to a requested freight service.

Another object of the present invention is to provide a solution which allows managing freight operations in a more integrated way, where operations can be more accurately planned and controlled, in particular as regard to prediction of time execution and supervision of goods to be delivered.

Yet a further object of the present invention is to provide a solution for managing rail freight operations, which is highly reliable, relatively easy to realize and at competitive costs.

This aim, these objects and others which will become apparent hereinafter are achieved by a freight wagon for railway freight, characterized in that it comprises:
- a load compartment for accommodating goods to be transported;
- an on-board control system which is suitable to receive instructions for the freight wagon to execute one or more phases of a predefined freight plan related to a request from a user for goods transportation, wherein, while executing said one or more phases, said on-board control system is arranged to record and communicate to one or more remote external control centers, events indicative of the one or more phases of said predefined freight plan under execution; and
- an autonomous on-board power feeding unit for self-powering the wagon freight during execution of at least part of said one or more phases of the predefined freight plan.

The above mentioned aim and objects of the present invention are also achieved by a method for managing method for managing railway freight operations, characterized in that it comprises the following steps:
- based on a request from a remote user for transportation of goods, identifying the availability of at least one freight wagon according to claim 1, suitable to be loaded in a loading area where said goods to be transported are located;
- defining a freight plan including one or more phases for the identified available freight wagon;
- communicating the defined freight plan to said identified available freight wagon;
- executing, by said identified available freight wagon, one or more phases of the communicated freight plan.

Further, the above mentioned aim and objects of the present invention are also achieved by a distributed control system for managing rail freight, characterized in that it comprises at least:
- one or more load control centers which are associated each to and are responsible for managing corresponding one or more loading areas where goods to be transported are located;
- at least one local freight control center which is operatively associated to and is suitable to manage freight operations for an associated freight departure station remote from said one or more loading areas, wherein said at least one local freight control center being in operative communication with one or more of said load control centers, and being arranged, based on a request received from a remote user for transportation of goods, to identify at least one available freight wagon according to claim 1 suitable to be loaded in a loading area where goods to be transported are located, to define a freight plan including one or more successive phases, and to communicate the defined freight plan to the identified available freight wagon, for execution of one or more phases of said defined freight plan.

Further characteristics and advantages will become apparent from the description of some preferred but not exclusive exemplary embodiments of a freight wagon, system and method according to the present disclosure, illustrated only by way of non-limitative examples with the accompanying drawings, wherein:
Figure 1 is a perspective view schematically showing an exemplary embodiment of a freight wagon according to the present invention;
Figure 2 is a block diagram schematically illustrating a decentralized control system for managing rail freight operations according to the invention;
Figure 3 is a flow chart illustrating a method for managing rail freight operations, according to the invention;
Figure 4 is a graphical representation schematically representing some components of the system illustrated in figure 2 and the wagon illustrated in figure 1 applied to a railway line.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof.

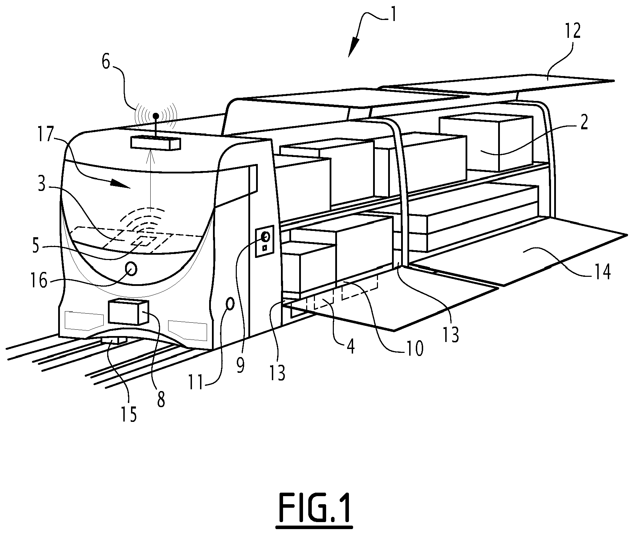

Figures 1, 2, 3 illustrate a freight wagon 1, a distributed system 100 and method 300 according to the invention using in particular the freight wagon 1, respectively.

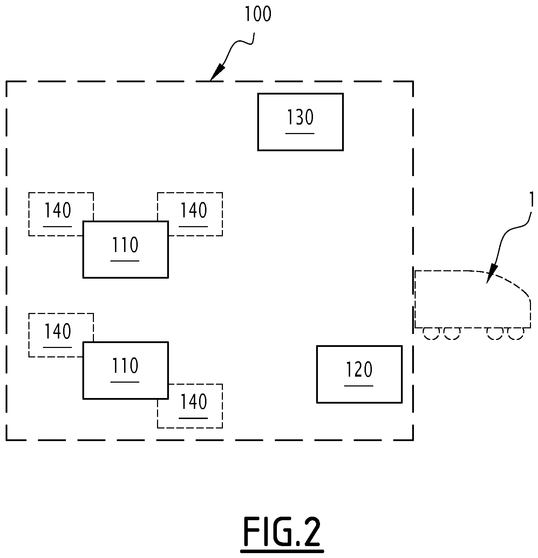

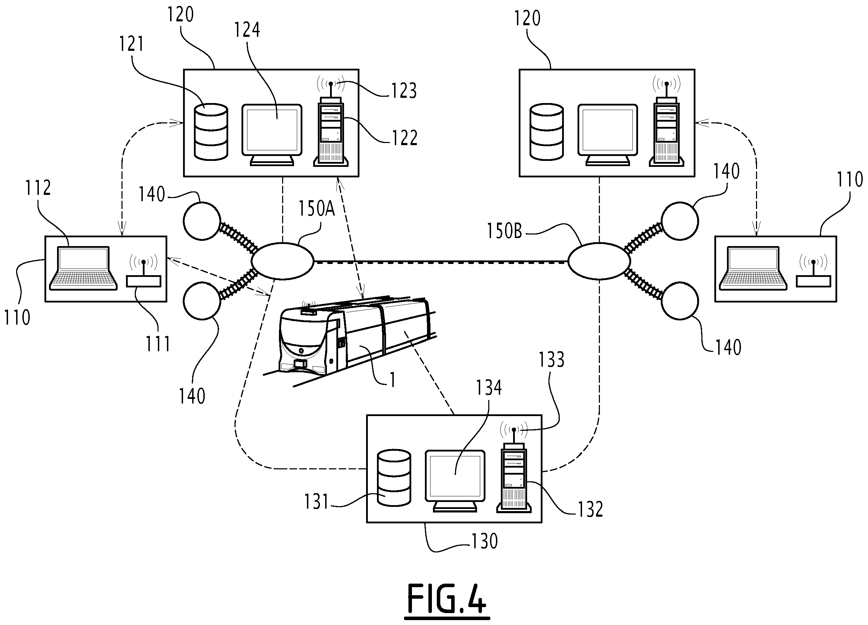

In particular, as schematically illustrated in figures 2 and 4, and according to embodiments which will described in more details hereinafter, the system 100 comprises at least one or more load control centers 110 which are associated each to and are responsible for managing corresponding one or more loading areas 140 where goods to be transported are located, and at least one local freight control center 120 which is operatively associated to and is suitable to manage freight operations for an associated freight departure station 150A remote from the one or more loading areas 140.

In particular, the local freight control center 120 is the reference control center for all loading areas 140 and related load control centers 110 which are operatively linked with one freight departure station 150A.

The local freight control center 120 is in operative communication with one or more of the load control centers 110, and is arranged, based on a request received from a remote user for transportation of goods, to identify at least one available freight wagon 1 suitable to be loaded in a loading area 140 where goods to be transported are located, to define a freight plan including one or more successive phases, and to communicate the defined freight plan to the identified available freight wagon 1, for execution of one or more phases of said defined freight plan.

According to an embodiment, and as illustrated in figures 2 and 4, the distributed control system 100 comprises an integrated freight operation control center 130 which is in operative communication with at least one of local freight control center 120 and is arranged for managing freight operations between the freight departure station 150A and a freight destination station 150B.

According to this embodiment, and as illustrated at the right side of figure 4, there is provided a second local freight control center 120 which is operatively associated to and is suitable to manage freight operations for the associated freight destination station 150B, and one or more additional load control centers 110.

Each of the additional load control centers 110 is associated to and is responsible for managing corresponding one or more loading areas 140 where goods have to be delivered.

Such one or more additional load control centers 110 are equivalent and substantially identical to the load centers 110 associated to the freight departure station 150A, and the second local control center 120 associated with the freight destination station 150B, is equivalent and substantially identical to the local control center 120 associated with the freight departure station 150A.

Indeed, according to the invention and as those skilled in the art would readily appreciated, goods can be shipped from one station to the other or, in a manner totally equivalent, in the opposite direction.

As illustrated in the exemplary embodiment of figure 1, a freight wagon 1 for railway freight according to the present invention, comprises, a load compartment 2 for accommodating goods to be transported, and an on-board control system 3, and an autonomous on-board power feeding unit 4 for self-powering the wagon during execution of at least part of its freight operations.

In particular, according to details which will be described in more details hereinafter, the on-board control system 3 of the freight wagon 1 is suitable to receive instructions to execute one or more phases of a predefined freight plan received from one or more the mentioned control centers, e.g. the local freight control center 110, following a request from a user for goods transportation, and is arranged, while executing, to record events each indicative of one or more corresponding phases under execution, and eventually communicate to at least one of the remote control centers, e. g. the local load control center 120, data indicative of a completed phase.

In turn, according to one embodiment, the autonomous on-board power feeding unit 4 comprises one or more banks of rechargeable batteries 4.

Depending on the size and also on the various applications and specific operations, these one or more banks of batteries 4 allow the freight wagon 1 to perform at least part of its service, e.g. one or more phases of a received freight plan, in a power autonomous way.

When necessary, the batteries can be recharged for example via a charging plug 11 connected to charging points when the freight wagon 1 is parked for example at a freight station, or when the freight wagon 1 is driven by a locomotive, during long-haul transfer from a departure freight station to a destination freight station.

As schematically illustrated in figure 1, the on-board control system 3 comprises an event recorder 5, and a communication device 6 which is operatively connected with the event recorder 5, and is suitable to communicate to one or more of the remote control centers 110, 120, 130 data indicative of the completion of one or more corresponding phases of the predefined freight plan.

In the exemplary embodiment illustrated, the freight wagon 1 comprises a monitoring device 10 adapted to monitor goods accommodated into the load compartment 2.

According to an embodiment, the monitoring device 10 comprises one or more load sensors 10, adapted to detect the weight of goods accommodated in the load compartment 2 and to output towards the event recorder 5 signals indicative of the actual weight.

In particular, the one or more load sensors 10 comprise a plurality of distributed and operatively interconnected piezoelectric cells, e.g. placed beneath the floor of the load compartment 2, which detect the weights inside the load compartment 2 and output signals indicative of the detected weights to the event recorder 5.

In turn, the event recorder 5 records the weight values together with a relative time stamp, thus allowing recording changes of the weight loaded.

Preferably, substantially at the same time, the communication device 6 communicates the values of weight detected to at least one of the remote control centers 110, 120, 130, e.g. to the integrated freight operation control center 130, using for example block chain technology .

Hence, the detected values and any variation thereof are recorded also in such remote control center 130, e.g. in a storing database 131, thus limiting, if not completely avoiding, tampering of any recorded events.

An automated coupler 8, e.g. provided with a robotic arm, is placed at the front of the freight wagon 1, and is operatively connected to the on-board control system 3.

The automated coupler 8 is arranged for automatically coupling the freight wagon 1 with another wagon or a locomotive to form a freight convoy or train when needed.

Clearly, an automated coupler 8 can be placed at the tail part of the freight wagon 1, in addition or in alternative to the automated coupler 8 provided at the front.

The illustrated freight wagon 1 comprises one or more identifying devices 9 which are arranged to allow unique identification of the freight wagon 1 itself, by at least one of the one or more remote control centers 110, 120, 130, and/or by an associated locomotive and/or other freight wagons the freight wagon 1 can be coupled to in operations.

In one embodiment, the one or more identifying devices 9 comprise active RFID tags, for example four active RFID tags which can be positioned at the sides, head and tail of the freight wagon 1, respectively.

In figure 1, only one exemplary RFID tag is illustrated placed at a side of the freight wagon 1.

As illustrated in figure 1, the freight wagon 1 comprises at least one door 12 coupled with an on-board control device 13, e.g. a solenoid switch, adapted to allow opening/closing of the door 12 and to output towards the event recorder 5 signals indicative of executed opening/closing of the door 12, where they are registered along with related time stamps.

Preferably, the on-board control system 3 is arranged to communicate, via the on-board communication device 6, also the door opening and closing events and related time stamps recorded into the event recorder 5, to one or more of the remote control centers 110, 120, 130, e.g. to the integrated freight operation control center 130.

In this way, a further control is performed over the shipped goods for checking proper loading and unloading operations, as well as unauthorized accesses thereto.

According to an embodiment, the freight wagon 1 comprises a movable loading ramp 14 which is adapted to allow loading/unloading of goods into or out from the load compartment 2.

The movable ramp 14 avoids the need for any special arrangement to bridge the gap between the platform at the loading area and the wagon 1 itself.

According to an embodiment, the loading ramp 14 is formed by a portion of the door 12, i.e. a bottom part.

In addition, and according to solutions readily available to those skilled in the art, the freight wagon can be provided with other equipment, sensors and devices, such as for example a beacon antenna 15, a cameral 16, et cetera....

In particular, the freight wagon 1 can be conceived as a fully autonomous and driver-less wagon thanks to its on board control system and related equipment and devices as previously described, where any needed control can be performed remotely.

Alternatively, as schematically shown in figure 1, the freight wagon 1 can also comprise at least one driver cabin 17 for a driver.

Further, one or more freight wagons 1 can be part train for railway transportation, or cab used to form locomotive-less railway convoy for railway transportation, exploiting the driver cabin 16 and hence one freight wagon as a "locomotive", or more preferably the on-board control system 3 for driving the convoy remotely without any locomotive and any driver at all.

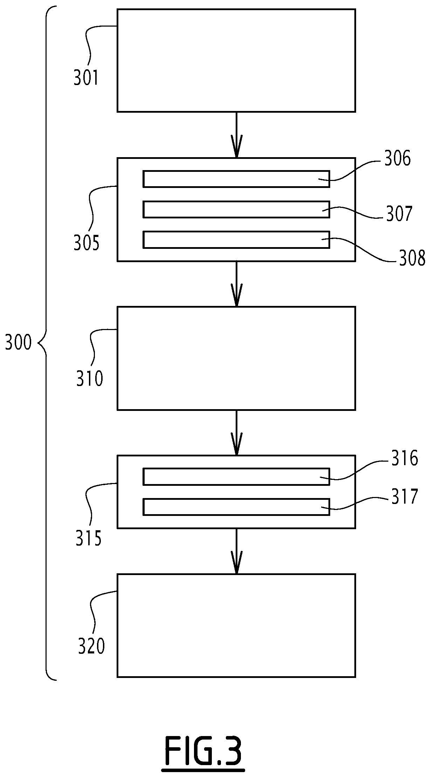

A method 300 for managing railway freight operations, according to the present invention will be now described with reference to figure 3 and in relation to the distributed control system illustrated in figure 2 and the freight wagon 1 above described.

As illustrated in figure 3, the method 300 comprises at least the following steps:
- 301: based on a request from a remote user for transportation of goods, identifying availability of at least one freight wagon 1, as previously described, which is suitable to be loaded in a loading area 140 where the goods to be transported are located;
- 305: defining a freight plan including one or more successive phases for the identified available freight wagon 1;
- 310: communicating the defined freight plan to the identified available freight wagon 1;
- 315: executing, by said identified available freight wagon 1 one or more phases of the communicated freight plan.

According to an embodiment, the step 305 of defining a freight plan comprises the sub-steps of:
- 306: drafting a proposed freight plan for the requesting user;
- 307: submitting the proposed freight plan to the requesting user for approval;
- 308: generating, upon approval by the requesting user, of the submitted proposed freight plan, a dedicated customer account for managing automated payments of one or more phases of the approved freight plan.

In particular, in the distributed control system 100 according to the present invention, the step 301 of identifying an available wagon 1, is carried out by the local freight control center 120 associated to the freight departure station 150A.

As illustrated, the local freight control center 120 comprises for instance a database 121 recording the various wagons 1 parked in deposit areas of the freight departure station 150A or in deposit areas of one or more remote loading areas 140 which are operatively linked to the freight departure station 150B, and one or more workstations 124 for operators.

Once an available freight wagon 1 is identified by an elaboration device 122 of the control center 120, the elaboration device 122 performs step 305 of defining a freight plan including one or more successive phases for the identified available freight wagon 1.

In particular, the elaboration device 122 drafts a proposed freight plan according to sub-step 306 for the requesting user, and then submits, via the communication device 123, and as per sub-step 307, the proposed freight plan to the requesting user for approval.

In drafting the freight plan, the elaboration device 122 calculates the predicted arrival time at the loading area 150, based on the route profile from the starting point of the identified freight wagon 1, and from there to the destination where the wagon 1 has to bring of the goods, related traffic conditions, distances to be covered, et cetera....

In addition, according to an embodiment of the present invention, the elaboration device 122 computes also the costs for the freight plan, and in particular for each phase of the proposed freight plan and/or for the proposed freight plan as a whole.

For example, the freight plan proposed can comprise three phases, e.g. a first phase of routing the identified wagon 1 to the loading area 140, loading it and returning loaded to the freight departure station 150A, a second phase 2 of transferring the goods from the freight departure station 150 to a remote, e.g. long-distance, destination freight station 150A illustrated in figure 4, and a third final phase of transferring the goods transported from the final destination freight station 150B to an unloading area 140, also illustrated in figure 4, operatively linked with the final destination freight station 150B, and unloading the goods there.

In particular, the identified wagon 1 can be involved in executing all phases of the freight plan or just one or more phases thereof, lonely and/or, in particular for the above indicated second phase, in combination with a locomotive and/or other wagons.

Then, the communication device 123 outputs the proposed freight plan to the requesting user for approval as per above indicated sub-step 307.

For example, the proposed freight plan is communicated to the user via the load control center 110 which is associated to and is responsible for managing the loading area 140 where the identified wagon 1 should go for initial loading.

Once the proposed freight plan is approved, a dedicated customer account is created in any suitable location, e.g. the cloud, the same load control center 110, or else, for managing automated payments of one or more phases of the approved freight plan once executed.

In practice, the approved freight plan corresponds to a "smart contract" containing one or more "smart sub contracts" which correspond each to a phase of the freight plan, and which can be realized for example based on block-chain technology.

Each "smart sub contract" is basically a digital program which is written to execute the transfer of money from the dedicated customer account to a freight account, resident for example in the integrated freight operation control center 130, at specific events, namely completion of the corresponding phase of the approved freight plan.

As above indicated, the freight wagon 1 executes for example a "smart sub contract" based on the events which are recorded in its event recorder 5, for instance the distance travelled since the start, as well as others, as above indicated, and or other events received from or sent to one or more of the various control centers 110, 120, 130, operatively linked with it.

Hence, upon approval of the freight plan, the local freight control center 120, as per step 310, communicates the approved plan to the identified wagon 1 which has then to be displaced to the loading area 140, thus starting execution of one or more phases of the approved plan.

In particular, in the method 300, the step 315 of executing, by the identified available freight wagon 1, one or more phases of the communicated freight plan, comprises the sub-steps of:
- 316: recording events indicative of the execution of a phase of said freight plan;
- 317: communicating to at least one or more remote control centers 110, 120, 130 completion of a phase of said defined freight plan.

In details, either the identified wagon 1 itself, or the local freight control center 120, communicates and confirms the wagon identification number and the predicted arrival time at the loading area 140 to the relevant load control center 110, when wagon 1 starts moving from its resident position.

Further, the load control center 110 can contact, via its communication device 111, the identified wagon 1, and starts tracking its movement from the starting position to the loading area 140.

In turn, the freight wagon 1 starts recording the distance travelled from the instant of departing from its initial position to the loading area 140, is loaded with the goods to be transported, and it records the weight of the loaded goods.

Once loading is completed, the loaded weight is noted as the reference weight for the calculation of actual bill and when unloading from the wagon 1.

"Smart contract" is updated with the actual bill amount once the wagon 1 moves away from the loading area 140 and reaches the freight departure station 150A.

Accordingly, the method 300 comprises the further step of:
- 320: transferring money from the dedicated customer account for payment of an executed phase.

Depending on the specific request, for example a small-scale and/or small distance shipment, the step 315 of executing, by the identified freight wagon 1 the commanded one or more phases of the defined operation freight plan, comprises the further sub-steps of:
- transporting, directly by the loaded wagon 1, the loaded goods to an unloading area 140 for delivery;
- downloading the transported goods and communicating completion of the operation freight plan, and in particular of the transporting phase to the unloading area and/or of the downloading of goods phase in the unloading area 150.

Accordingly, the step 320 of transferring money from the dedicated customer account for completing payment of each executed phase can be performed again.

Alternatively, the step 315 of executing, by the identified freight wagon 1 the commanded one or more phases of the defined operation freight plan, further comprises one or more of the following sub-steps of:
- when the loaded wagon 1 returns to the freight departure station 150A, automatically coupling the loaded wagon 1 with a locomotive or one or more other wagons, e.g. to form a convoy or a train;
- transferring the formed convoy or train to a remote final destination freight station 150B;
- automatically disconnecting the identified loaded wagon 1 from the locomotive and/or other wagons connected therewith;
- communicating, completion of transfer phase of goods at the final destination freight station 150B.

Again at this point, the step 320 of transferring money from the dedicated customer account for completing payment of the executed transfer phase of goods can be executed.

In particular, when the train or convoy travel from the freight departure station 150A to the final destination 150B control is handed over to the integrated control center 130, which has stored in the database 131 data relative to the various convoys or train traveling along the line under its control, related routes, actual operating status and parameters. Related data and information are elaborated by an elaboration unit 132 and exchanged, with the other control centers 110, 120 or trains/convoys, via the associated communication device 133. One or more workstations 134 assist the center operators.

Further, the step 315 of executing, by the identified freight wagon 1, the commanded one or more phases of the defined operation freight plan, further comprises one or more of the following sub-steps of:
- dispatching the identified loaded wagon 1 to the delivery site, e.g. at an unloading area 140;
- unloading the transported goods from the compartment 2;
- communicating final delivery of transported goods at the unloading area, and definitive completion of the operation freight plan.

Hence, the step 320 of transferring money from the dedicated customer account for completing payment of the executed operation freight plan can be finalized for the last time.

When the identified freight wagon 1 enters a freight station 150, and/or when it is going to be coupled with a locomotive or other wagons, a further step of identifying the loaded wagon entering the freight station, e.g. by the corresponding local freight control center 120.

Hence, it is evident from the foregoing description that the freight wagon 1, the distributed control system 100 and the method 300 according to the present invention allow to achieve the intended aim and objects.

Indeed, according to the present invention, it is possible to better plan freight operations for customers, and to have more flexible plans with more predictable arrival times, and better controlled operations.

In particular, the use of autonomous self-propelled wagons 1 renders very competitive small scale and small-medium rang freight operations.

These results are achieved according to a solution very flexible that can be applied in forming convoys and trains for long haul shipments.

The freight wagon 1, method 300 and system 100 thus conceived are susceptible of modifications and variations, all of which are within the scope of the inventive concept as defined in particular by the appended claims; for example, communication among the various parts of the system 100 can occur in a different way with respect to what previously described, a user can input a request for goods transportation directly on an interface 112 provided at the relevant load center 110, or through an own user interface application, e.g. on a personal PC, laptop, mobile telephone or the like, and then such request can be routed directly to the relevant local freight control center 120, or via the related load center 110.

All the details may furthermore be replaced with technically equivalent elements.

## Claims

1. A freight wagon (1) for railway freight, **characterized in that** it comprises:
- a load compartment (2) for accommodating goods to be transported;
- an on-board control system (3) which is suitable to receive instructions for the freight wagon (1) to execute one or more phases of a predefined freight plan related to a request from a user for goods transportation, wherein, while executing said one or more phases, said on-board control system (3) is arranged to record and communicate to one or more remote external control centers (110, 120, 130), events indicative of the one or more phases of said predefined freight plan under execution; and
- an autonomous on-board power feeding unit (4) for self-powering the wagon freight (1) during execution of at least part of said one or more phases of the predefined freight plan.

2. A freight wagon (1) for railway freight, as claimed in claim 1, wherein said on-board control system (3) comprises an event recorder (5) and a communication device (6) operatively connected with the event recorder (5) for communicating to at least one of said one or more remote control centers (110, 120, 130) data indicative of the completion of one or more corresponding phases of said predefined freight plan.

3. A freight wagon (1) for railway freight, as claimed in one of claims 1 or 2, wherein it comprises a monitoring device (10) adapted to monitor goods accommodated into said load compartment (2).

4. A freight wagon (1) for railway freight, as claimed in claim 1, wherein it comprises at least an automated coupler (8), operatively connected to said on board control system (3), which is arranged for automatically coupling the freight wagon (1) with another wagon or a locomotive.

5. A freight wagon (1) for railway freight, as claimed in claim 1, wherein it comprises one or more identifying devices (9) configured to allow unique identification of the freight wagon (1) by at least one of said one or more remote control centers (110, 120).

6. A freight wagon (1) for railway freight, as claimed in claims 2 and 3, wherein said monitoring device (10) comprises one or more load sensors (10) adapted to detect the weight of goods accommodated in said load compartment (2) and to output towards said event recorder (5) signals indicative of the actual weight.

7. A freight wagon (1) for railway freight, as claimed in claim 2, wherein it comprises at least one door (12) coupled to an on-board control device (13) adapted to allow opening/closing of the door (12) and to output towards said event recorder (5) signals indicative of executed opening/closing of the door (12).

8. A method (300) for managing railway freight operations, **characterized in that** it comprises the following steps:
- (301): based on a request from a remote user for transportation of goods, identifying the availability of at least one freight wagon (1) as claimed in 1, suitable to be loaded in a loading area (140) where said goods to be transported are located;
- (305): defining a freight plan including one or more phases for the identified available freight wagon (1);
- (310): communicating the defined freight plan to said identified available freight wagon (1);
- (315): executing, by said identified available freight wagon (1), one or more phases of the communicated freight plan.

9. A method (300) for managing railway freight operations, as claimed in 8, wherein said step (305) of defining a freight plan comprises the sub-steps of:
- (306): drafting a proposed freight plan for the requesting user;
- (307): submitting the proposed freight plan to the requesting user for approval;
- (308): generating, upon approval by the requesting user, of the submitted proposed freight plan, a dedicated customer account for managing automated payments of one or more executed phases of the approved freight plan.

10. A method (300) for managing railway freight operations, as claimed in claim 8, wherein said step (315) of executing, by said identified available freight wagon (1), one or more phases of the communicated freight plan, comprises the sub-steps of:
- (316): recording events indicative of the execution of a phase of said operation freight plan; and
- (317): communicating to at least one or more remote control centers (110, 120, 130), completion of a phase of said defined freight plan.

11. A method (300) for managing railway freight operations, as claimed in claim 8, wherein said step (315) of executing, by said identified freight wagon (1), one or more phases of the communicated freight plan, comprises performing automatically mechanical coupling of the identified available freight wagon (1) with a locomotive and/or one or more additional wagons.

12. A distributed control system (100) for managing rail freight, **characterized in that** it comprises at least:
- one or more load control centers (110) which are associated each to and are responsible for managing corresponding one or more loading areas (140) where goods to be transported are located;
- at least one local freight control center (120) which is operatively associated to and is suitable to manage freight operations for an associated freight departure station (150A) remote from said one or more loading areas (140), wherein said at least one local freight control center (120) being in operative communication with one or more of said load control centers (110), and being arranged, based on a request received from a remote user for transportation of goods, to identify at least one available freight wagon (1) as claimed in claim 1 suitable to be loaded in a loading area (140) where goods to be transported are located, to define a freight plan including one or more successive phases, and to communicate the defined freight plan to the identified available freight wagon (1), for execution of one or more phases of said defined freight plan.

13. A distributed control system (100) as claimed in claim 12, wherein said at least one local freight control center (120) is further arranged to submit a proposed freight plan to the requesting user for approval, and upon approval, to trigger generation of a dedicated customer account for managing automated payments of one or more phases of the approved freight plan once executed by the identified available freight wagon (1).

14. A distributed control system (100) as claimed in claim 12, wherein it further comprises an integrated freight operation control center (130) which is in operative communication with at least one of said at least one local freight control center (120), wherein said integrated freight operation control center (130) is arranged for managing freight operations between said freight departure station (150A) and a freight destination station (150B).
